# EUROPEAN PATENT SPECIFICATION

(11) **EP 0 178 852 B1**
(45) Date of publication and mention of the grant of the patent: **06.04.1994**
(21) Application number: 85307269.2
(22) Date of filing: 10.10.1985
(51) Int. Cl.: H05B 41/29

(54) **Electronic ballast circuit for fluorescent lamps**
Elektronisches Vorschaltgerät für Leuchtstofflampen
Circuit ballast électronique prévu pour lampes fluorescentes

(30) Priority: 16.10.1984 US 661397
(43) Date of publication of application: 23.04.1986
(73) Proprietor: ADVANCE TRANSFORMER CO. (a Division of Philips Electronics North America Corporation), New York, New York 10017 (US)
(72) Inventor: Grubbs, Calvin E., Garland Texas 75040 (US)
(74) Representative: Cline, Roger Ledlie

(56) References cited:
- EP-A- 0 048 977
- DE-A- 2 110 287
- DE-A- 2 642 272
- DE-A- 3 025 487
- DE-A- 3 312 575
- US-A- 4 461 980
- US-A- 4 463 286

## Description

The present invention relates to a ballast circuit for fluorescent or other gaseous discharge lamps. More particularly, it relates to an electronic ballast circuit for energizing fluorescent lamps at high frequency from a conventional 60 Hz power source.

### Background of the Invention

As used herein, the term "fluorescent" is intended to include other gaseous discharge lamps such as high-intensity discharge lamps. It is known that these lamps operate more efficiently at frequencies higher than 60 Hz. Typically, such frequencies may range from 15 KHz to as high as 100 KHz. In the prior art, there have been many suggestions of electronic ballast circuits capable of high frequency operation, and there have also been commercial attempts to provide such electronic ballasts.

It has recently been recognized that to obtain longer life on fluorescent lamps designed for high frequency operation, the lamp current should be regulated to a degree higher than some may have thought necessary in earlier ballast circuits. There is a problem in obtaining a highly regulated lamp current because, in a ballast intended for residential or commercial use, conventional 60 Hz line voltage is the only practical source of power. Even when full-wave rectified, so that a 60 Hz source in effect becomes a 120 Hz source, there is substantial variation in the amplitude of the source voltage fed to the power transformer which normally energizes the lamp load. If this variation in amplitude is reflected in applied lamp current, it is undesirable because it is believed any such variation will reduce effective lamp life.

A measure or factor sometimes used by lamp manufacturers to limit or define operating specifications of a ballast to ensure longer lamp life is the "crest factor" which is defined as the ratio of the peak amplitude of the lamp current to the rms value of lamp current. Some lamp manufacturers require, at least for certain lamps, that the crest factor of a solid state ballast operating at high frequency be less than 1.6. One of the reasons that desirable values of crest factor are not obtainable in prior art electronic ballast circuits is that the voltage is permitted to go to zero volts between the cusps of the full wave rectified source voltage. (This period between the peaks or cusps of the rectified voltage, when the voltage goes to zero volts, or to carry-over voltage if any auxiliary supply is used, is referred to as "inter-cusp" period). Even if an auxiliary source of DC voltage is used to store energy (as in a capacitor, for example), crest factors of less than 1.6 are nevertheless difficult to attain in such a system without auxiliary filters or unduly large values of components, which results in larger sizes of components, and that defeats some of the primary purposes of a solid state ballast - namely, reduction in the size of components and increased operating efficiency.

In some electronic ballasts, the crest factor is improved simply by adding large filters to the full wave rectified source voltage, but, in turn, adding bulky and costly components and reducing the overall efficiency of the ballast.

In WO-A1-82/01276, there is disclosed a lamp energizing circuit including at least one gaseous discharge lamp from a source of electrical power having a voltage amplitude varying in time, comprising inverter circuit means which can be connected to receive power from said source and including first and second controlled switches, means to gate said switches to conduction respectively in alternate cycles of inverter frequency thereby generating a high frequency electrical signal at an output which can be connected to said lamp circuit to supply power thereto; sensing circuit means which in use generates a control signal in response to lamp current; feedback control circuit means which responds to said control signal to control the gating of the controlled switches thereby regulating lamp current to a predetermined value. The inverter circuit in this reference is non-resonant. The present invention is characterized in that said inverter circuit means includes a resonant circuit having a resonant frequency and connected to said output, said feedback control circuit means including means which varies the frequency of conduction of said first and second controlled switches in relation to the resonant frequency of said inverter circuit means and in response to said control signal representative of lamp current during normal operation thereby regulating output of said resonant circuit to regulate said lamp current and to reduce the crest factor of lamp current.

An example of the invention will now be described with reference to the accompanying drawings in which:
FIG. 1 is a functional block diagram of an electronic ballast circuit using negative feedback to regulate lamp current, e.g. as known from WO-A1-82/01276;
FIG. 2 shows idealized waveforms of signals illustrating the operation of the circuitry of FIG. 1;
FIG. 3 is a circuit schematic diagram, partly in functional block form, of an electronic ballast for gaseous discharge lamps constructed according to the present invention;
FIG. 4 is a schematic diagram, partly in functional block form, of the timing and frequency control circuitry of FIG. 3;
FIG. 5 is a plot of gain versus frequency of the inverter circuit of FIG. 3; and
FIG. 6 contains graphs of idealized waveforms illustrating the performance of the operation of the circuitry of FIG. 3.

### Detailed Description of Preferred Embodiments

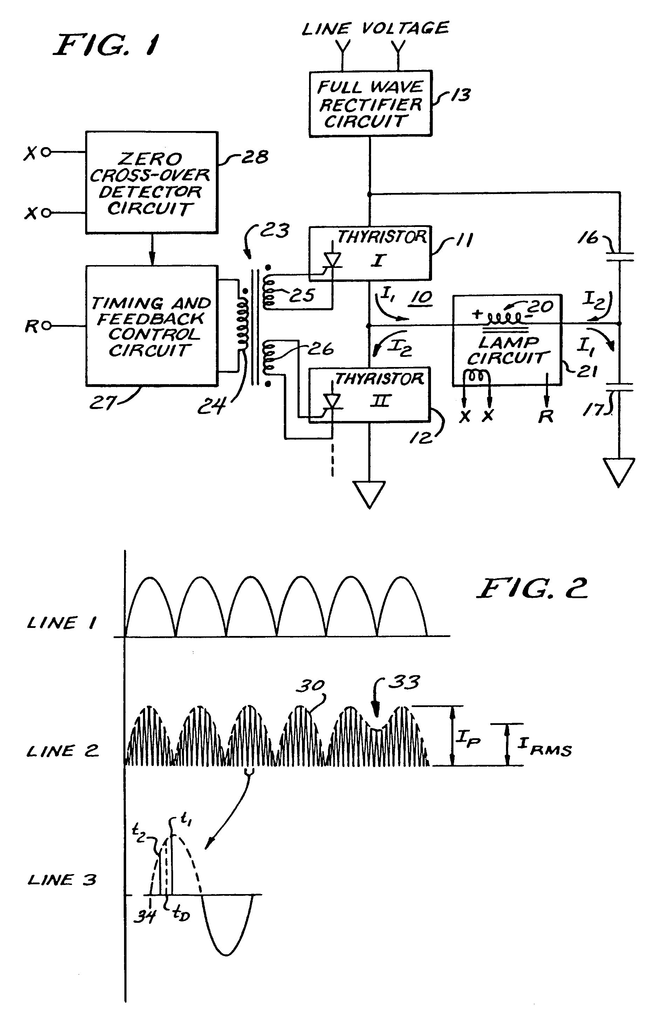

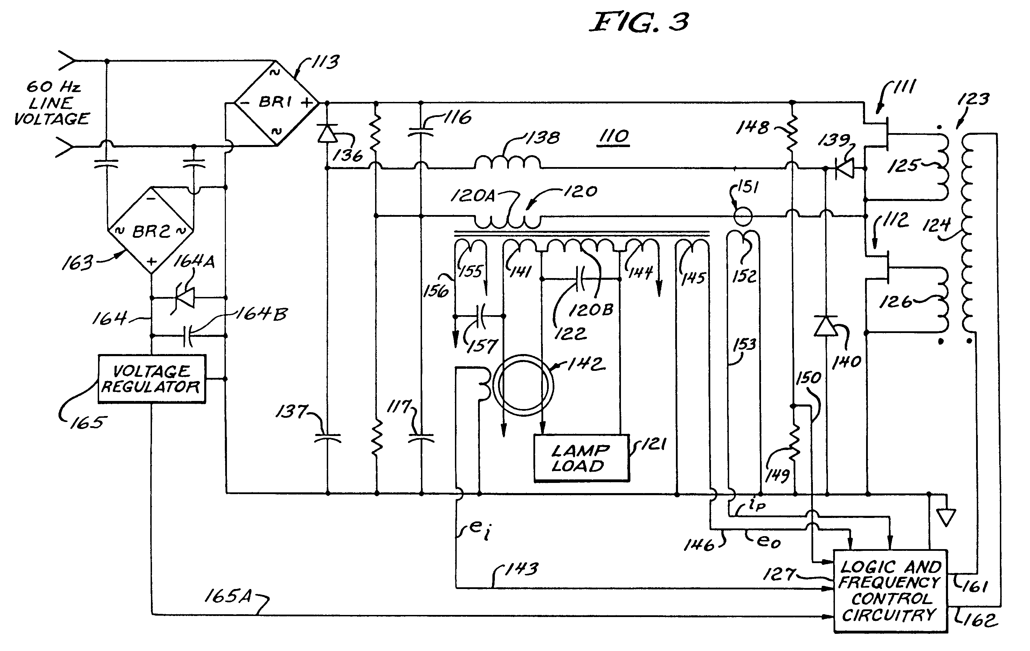

Turning to FIG. 1, reference numeral 10 generally designates a thyristor/capacitor bridge circuit including first and second thyristors (silicon control rectifiers) 11, 12 connected in series with a full-wave rectifier circuit 13 which receives standard 60 Hz line power and converts it to a full-wave rectified output signal of 120 Hz, such as is illustrated in idealized form on line 1 of FIG. 2.

The bridge circuit 10 also includes first and second balanced capacitors 16, 17 connected in series to form two legs of the bridge. The diagonal branch of the bridge includes a power transformer generally designated 20, the output of which is coupled to a lamp load circuit comprising gaseous discharge lamps, such as fluorescent lamps, diagrammatically represented by the block 21.

The value of capacitors 16 and 17, and the inductance (including any reflected impedance from the load) of transformer 20 form a resonant circuit when thyristors 11, 12 are conducting.

The thyristors 11, 12 are gated "on" by a signal coupled through a pulse transformer generally designated 23. The transformer 23 includes a primary winding 24 driven by the Timing and Feedback Control Circuit 27, and first and second secondary windings 25, 26 which are connected in circuit respectively with the gate leads of thyristors 11, 12 in such a manner that current flowing through primary winding 24 of transformer 23 in one polarity will cause thyristor 11 to conduct, and current flowing through the primary winding 24 in the opposite polarity will cause thyristor 12 to conduct.

Timing for the Timing and Feedback Control Circuit 27 is derived from a Zero Cross-over Detector Circuit 28 which receives a signal from a secondary winding in the power transformer 20. That signal is designated X-X, and the Zero Cross-over Detector Circuit 28 generates a pulse each time the load current reverses polarity.

A signal designated R is generated in the lamp circuit representative of lamp current. The signal R is a level signal (not a sinusoidal signal) having a magnitude representative of a value of lamp current averaged over a number of cycles of the high frequency lamp current.

As explained above, when thyristor 11 conducts, capacitor 16 discharges at least partly, and a current represented by arrows I₁ flows through thyristor 11 and the primary of transformer 20 from the positive to the negative terminal, and thence through capacitor 17 to ground. Because the transformer 20 and capacitors 16 and 17 form a resonant circuit, the current I₁ will reverse in polarity dependent upon the resonant frequency of the circuit, and thereafter thyristor 12 will be gated to conduction with current flowing in the direction of the arrows I₁. Thyristor 11 will be non-conducting at this time.

Thus, a high-frequency current oscillating at a frequency (which may be, for example, in the range of 20 KHz to 50 KHz) is generated in the lamp circuit and coupled to energize the lamp load. The positive half of the symmetrical resulting waveform at the output of the power transformer 20, again in idealized form, is seen on line 2 of FIG. 2. The envelope of the waveform is shown in phantom as a series of cusps and designated 30. It corresponds to the frequency and same general shape as the 120 Hz rectified line voltage of line 1. The lamp current goes to zero as the source voltage goes to zero during the inter-cusp period. A storage capacitor may be used to supply a carry-over voltage in the inter-cusp period, in which case the envelope may be as seen at 33 on line 2. In either case, since the lamp current will have a generally similar envelope, the crest factor for lamp current is undesirably high.

To further explain the operation of the current regulating feature of the circuit of FIG. 1, an individual cycle of lamp current is shown, once more in idealized form, on an expanded time scale of line 3 of FIG. 2. It is sinusoidal in form, though, as mentioned above, the peak-to-peak value of that wave will depend upon the magnitude of the rectified source voltage.

Referring then to FIG. 1, the Zero Cross-over Detector Circuit 28 generates a signal at time represented in FIG. 2 by reference numeral 34 when current I₁ or I₂ goes through a zero value. The timing portion of the control circuit 27 thereupon establishes a fixed time delay represented diagrammatically by the arrow t_{D} in line 3. If the lamp current, represented by the value of the signal R is a value which corresponds to a predetermined or reference value of current reflecting a desired lamp current, then the thyristor which is to be fired will be triggered at the end of the time t_{D}. If the value of the signal R is greater than the predetermined reference value, indicating that lamp current is greater than desired, the feedback control circuit 27 delays the timing pulse proportionately so that, for example, the thyristor to be gated will not be gated on until a time t₁. This will reduce the energy coupled to the resonant circuit and thus it will reduce the voltage applied to the power transformer 20. If, on the other hand, the magnitude of the signal R is less than the reference signal, it indicates that lamp current is less than the predetermined value, and the triggering of the thyristors will be advanced such as is illustrated at t₂ in line 3, causing more energy to be coupled to the power transformer 20 since the thyristors will be energized earlier in the cycle of inverter current.

The response time of the feedback control circuit for the system of FIG. 2 is relatively slow--that is, of the order of a few tenths of a second. In other words, the -3 db point of the frequency response characteristic of the feedback circuit is of the order of 2-5 cy/sec. As a result, the amplitude of voltage applied to the lamp circuit and the amplitude of lamp current vary in accordance with the envelope of the voltage waveform seen on line 2. The resulting crest factor for lamp current is, as explained above, undesirable from the standpoint of criteria established by lamp manufacturers for longevity of lamps. Specifically, if the envelope of the signal of line 2 with the inter-cusp voltage going to zero represents peak lamp current and the arrow designated I_{RMS} designates rms lamp current; and the crest factor has a value nominally in the range of 2.0-3.0.

Turning now to FIG. 3, there is shown a preferred circuit for achieving a regulated lamp current with reduced amplitude modulation of the voltage applied to the lamps and an improved crest factor for a lamp current. To facilitate comparison with the circuitry of FIG. 1, components in the circuit of FIG. 3 which have a similar function to those identified in FIG. 1 will be identified with a corresponding reference numeral preceded by a "1". Thus, an inverter in the form of a half-bridge circuit is generally designated 110. It includes first and second semiconductor switches 111, 112. The controlled switches illustrated are MOSFET transistors, although other semiconductor switches may also be used. MOSFET transistors were selected because of their higher frequency response, enabling the inverter frequency to be increased and thereby reducing the size of other components. The nominal operating frequency of the inverter of FIG. 3 is in the range of 50-100 KHz, and the nominal resonant frequency is 50 KHz. MOSFET transistors are suited to this application because, as will be appreciated from an understanding of the circuit, they are turned "on" (i.e., to a state of conduction) when no forward current is flowing in the branch in which the MOSFET is located, and they are turned "off" when forward current is flowing. This suits the application to the faster turn on and turn off times of MOSFET transistors compared, for example, to those of bipolar transistors.

Still referring to FIG. 3, the inverter circuit 110 includes capacitors 116 and 117 in the other branches. To energize the inverter circuit 110, 60 Hz line voltage is connected top a rectifier bridge circuit 113, the output of which is fed to the inverter circuit 110, as illustrated.

A power transformer generally designated 120 has a primary winding 120A connected between the common junction of the transistors 111, 112 and the common junction of the capacitors 116, 117--that is, the power transformer 120 is connected in the diagonal branch of the bridge circuit 110. A first secondary winding designated 120B feeds the lamp load circuit 121 which may include fluorescent or other gaseous discharge lamps, such as high intensity discharge lamps, in any number of configurations. A capacitor 122 is connected across the secondary winding 120B and forms the capacitive reactance in combination with the inductive reactance of the transformer 120 to define the resonant frequency of the inverter which in the illustrated embodiment is approximately 50 KHz, as indicated.

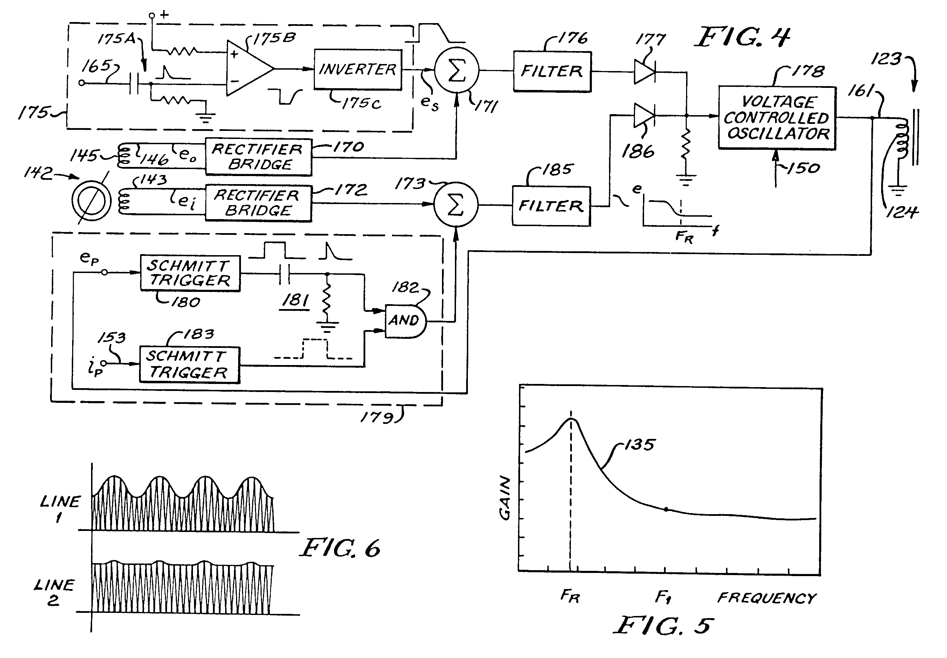

The transistors 111, 112 are triggered at mutually exclusive times by a drive transformer 123 having a primary winding 124 which is connected to the output of a logic and frequency controlled circuitry 127. Transformer 123 also has a first secondary winding 125 which is connected to the gate of transistor 111, and a second secondary winding 126 which is connected to the gate of transistor 112 as seen. The details of the logic and frequency control circuitry 127 will be described in connection with FIG. 4, and it is analogous to the logic and feedback control circuitry 27 of FIG. 1 in that it is responsive to a signal representative of lamp current to regulate the value of lamp current. The circuitry 127, however, does so in a different manner. Specifically, the circuitry 127 cooperates with and takes advantage of the frequency response characteristic of the bridge 110 and controls the operating frequency of the bridge in relation to its resonant frequency to achieve an overall desired output or "gain" in achieving current regulation. This can be seen by referring to FIG. 5 in which reference numeral 135 designates a curve showing the relationship between frequency and the gain of the inverter circuit or "resonant amplifier" as it is sometimes called. In this context, the resonance of the amplifier is defined, as indicated above, primarily by the capacitor 122 and the leakage inductance of the power transformer 120.

Referring then to FIG. 5, the resonant frequency of the inverter is designated F_{R} and as can be seen, as the frequency of operation increases above the resonant frequency, the gain of the inverter decreases. Further, it will be observed that the gain decreases monotonically, though not necessarily linearly between the resonant frequency F_{R} and a frequency F₁. In a manner to be made clear presently, the frequency control circuitry 127 senses average lamp current and generates an output signal which is coupled to the transformer 123 to gate the transistors 111, 112 in alternate half-cycles. The frequency of that gating or triggering signal is increased as lamp current increases, thereby to decrease the voltage applied to the lamp load circuit at the secondary winding 120B, resulting in lowering the lamp current.

Returning to FIG. 3 once more, a carry-over voltage is supplied for supplying energy between the peaks of the 120 Hz full wave rectified source voltage. The carry-over voltage circuitry includes a diode 136 having its cathode connected to the positive output of the full wave rectifier bridge circuit 113 and its anode connected to a storage capacitor 137. The junction between diode 136 and capacitor 137 is coupled by means of an inductor 138 and a diode 139 to the junction between the transistors 111, 112 which, it will be observed, is also an input terminal to the primary winding 120A of power transformer 120. The half wave rectifier formed by diodes 139 and 140 provides a voltage equal to one half peak supply voltage and permits capacitor 137 to be charged from the high frequency output of the inverter circuit rather than from the line supply, thereby minimizing line current distortion and retaining a high input power factor. Briefly, the capacitor 137 is relatively large to provide storage of sufficient energy. It is charged through diode 139 and inductor 138, and it discharges through diode 136 when the amplitude of the output voltage of the bridge cricuit 113 falls below the level of voltage stored across capacitor 137. A diode 140 may be connected as shown across diode 139 and transistor 112.

Turning now to the signal inputs to the Logic and Frequency Control Circuitry 127, a first input signal is derived from a secondary winding 141 of transformer 120 which may be coupled to a filament circuit for one or more lamps in the load circuit 121. A current transformer generally designated 142 senses the current flowing in the load of the secondary winding 141 and generates a signel eᵢ on line 143 which is representative of lamp load current. Additional lamp filaments may be energized by a secondary winding 144. Another secondary winding 145 generates a signal, eₒ, which is representative of lamp voltage. The signal eₒ is also fed to the Logic and Frequency Control Circuitry 127 along line 146 and is used for lamp voltage limiting as discussed further below. Still another secondary filament winding of transformer 120 is designated 155 having an output lead 156 which is coupled with a starting capacitor 157 to the high voltage secondary.

First and second resistors 148, 149 may be connected in series across the transistors 111, 112 to form a voltage divider; and the signal at the junction between the resistors 148, 149 is representative of the amplitude of the source voltage. That signal is fed along a lead 150 to the Logic and Frequency control Circuitry 127 and may be used to protect against source over-voltage.

A current transformer 151 senses current flowing in the primary of transformer 120 and including a secondary winding 152. The signal on line 153 is designated iₚ and represents the phase of local current. It is coupled along a line 153 to an input of the Logic and Frequency Control Circuitry 127.

The output leads of the Logic and Frequency Control Circuit are designated 161 and 162; and they are connected directly to the terminals of the primary winding 124 of transformer 123.

Power for the Logic and Frequency Control Circuitry 127 is derived from a conventional bridge rectifier circuit generally designated 163 which is capacitively coupled to the line voltage and which generates an output signal on a line 164 coupled through a conventional voltage regulator circuit 165 to generate logic and control power for the circuitry 127. A Zener diode 164A and filter capacitor 164B are also connected as shown, as is conventional.

Turning now to FIG. 4, the Logic and Frequency Control Circuitry 127 is seen in functional block form. The secondary winding 145 of power transformer 120 and lead 146 on which the signal eₒ appears are repeated. The signal eₒ is representative of lamp voltage, and it is coupled through a bridge rectifier circuit 170 to a summing junction 171. Similarly, the signal eᵢ representing lamp current generated on line 143 from current transformer 142 is coupled through a bridge rectifier circuit 172 to a summing junction 173.

The other input from summing junction 171 is a signal designated eₛ which is generated by a start circuit enclosed within dashed line 175. The start circuit 175 is actuated by the voltage signal on line 165A when power is turned on and voltage is sensed at the output of the low voltage regulator 165. The start circuit includes a differentiator 175A which feeds the negative input of an operational amplifier 175B, the output of which is inverted by inverter 175C. The start circuit generates an output voltage for a predetermined time as graphically illustrated in FIG. 4, and it then has a gradual fall time, reducing to zero volts. The purpose of the start circuit 175 is to force the operating frequency to a high value during start-up so that the lamp filaments may be heated for a time before voltage is applied to the lamps. The output of summing junction 171 is fed through a filter 176 and a diode 177 to the input terminal of a voltage controlled oscillator 178. The output frequency of the voltage controlled oscillator 178 increases as the input voltage increases.

The other terminal of summing junction 173 is received from the output of a phase detector circuit enclosed within dashed line 179. One input to the phase detector circuit 179 is received on line 153 from current transformer 151 and is representative of the phase of inverter current, ip. The other input signal to phase detector 179 is the drive signal on line 161 which is coupled to the primary 124 of the drive transformer 123. This signal is representative of the phase of the voltage across the primary since it determines the triggering of the semiconductor switches 111, 112 as indicated above. That signal is coupled to a first Schmitt trigger circuit 180 to square it and a differentiator 181 to an AND gate 182. The signal iₚ is fed to a second Schmitt trigger circuit 183 to the other input of AND gate 182.

Phase detector circuit 179 is diagrammatically illustrated in FIG. 4. When the drive frequency of the semiconductor switches is near the resonant frequency F of the resonant inverter amplifier, the output signal of the phase detector 179 is a positive voltage. As the operating frequency of the inverter increases above the resonant frequency, indicating that the current iₚ lags the voltage eₚ, the output voltage is zero. As the operating frequency of the inverter falls near or below the resonant frequency, the phase angle of current becomes leading and the output voltage increases. That output voltage is fed to the summing junction 173. The output of the summing junction 173 is fed through a filter 185 and a diode 186 to the input of the voltage controlled oscillator 178.

### OPERATION

As explained above, the frequency of the voltage controlled oscillator 178 determines the operating frequency of the inverter. As that frequency increases from the resonant frequency, the gain of the inverter will decrease continuously. During start-up, the start circuit 175 generates the signal e which is coupled through the junction 171, filter 176 and diode 177 to the input of voltage controlled oscillator 178 to set the operating frequency at a high value. Thus, lamp voltage is low until the filaments are heated. The output signal of the start circuit 175 will then ramp down to zero volts, and under normal conditions, the voltage applied to the lamp circuit will increase as the frequency of the voltage controlled oscillator 178 decreases, thereby decreasing the drive frequency of the semiconductor switches 111, 112.

As the start voltage begins to ramp down, at the end of the predetermined time indicated at T₁, the inverter drive frequency will decrease toward resonance and the voltage applied to the lamps will correspondingly increase. As the start voltage ramps down and the inverter frequency decreases, the applied voltage to the lamps will increase, thereby also causing an increase in the signal eₒ on line 146. The voltage applied to the lamps will continue to increase until the lamps ignite or eₒ increases sufficiently to limit the decrease in drive frequency.

When the lamps ignite, the signal eₒ will decrease since the voltage across the lamps will decrease; and the signal eᵢ representative of lamp current coupled to the other summing junction 173 will be the controlling signal, as described above. As mentioned, the drive frequency of the inverter will normally be in the range above the resonant frequency. Should the drive frequency decrease toward resonance, the output of the phase detector circuit 179 will be added to the output of the rectifier 172 at summing junction 173, thereby prohibiting operation beneath the resonant frequency.

Assuming normal operation, namely that the operating frequency of the inverter is above resonance, and the output signal of the phase detector circuit 179 will be at zero volts, the output signal of rectifier 172 (which is representative of lamp current) will control. As the lamp current signal increases, the frequency of voltage controlled oscillator will also increase and the gain of the inverter will be reduced. As the signal representative of lamp current decreases, on the other hand, the frequency of the voltage controlled oscillator 178 will decrease, thereby increasing the gain of the inverter circuit. Thus, the lamp current is regulated. If the operating frequency of the inverter becomes too low--that is, if it reduces beneath the resonant frequency of the inverter, then the output signal of the phase detector 179 will increase and thereby limit the lower operating frequency of the voltage controlled oscillator 178. Thus, the phase detector circuit 179 defines a lower limit to the operating frequency range of the inverter.

Should the applied voltage to the lamp circuit increase beyond the normal operating range (as might occur if a lamp burns out or is removed), the signal eₒ on line 146 increases to drive the frequency of the voltage controlled oscillator 178 to a higher frequency and thereby reduce the gain of the inverter and avoid an over-voltage condition. It will be observed that the function of the diodes 177, 186 is to provide that the higher output signal from either summing junction 171 or summing junction 173 be effective to drive the voltage controlled oscillator 178. That is, the two output signals of the summing junctions are not added. Rather, the signal having the greater magnitude controls the operating or drive frequency.

The characteristic of the voltage-to-frequency converter 178 is such that as the input signal increases, the frequency of the output signal also increases. To illustrate the effect of increasing the frequency of the signal coupled to the drive transformer 123, reference is made to FIG. 5 and the response characteristic 135. As the operating frequency increases, the gain will diminish, thereby reducing the amplitude of the voltage at the secondary winding 120B of transformer 120 and consequently reducing lamp current. By designing the circuitry of FIG. 4--namely, the feedback control circuitry or frequency control circuitry as it is sometimes referred to, to have a frequency response such that its minus 3 db frequency point is approximately 5 KHz for a resonant frequency of 50 KHz (F in FIG. 5), a crest factor of 1.6 or less can be achieved. Thus, not only is lamp current regulated, but it is also rendered relatively insensitive to variations in the source voltage. By way of illustration, referring to FIG. 6, line 1 diagrammatically illustrates the envelope of the voltage applied to the primary winding 120A of power transformer 120, but due to the regulating effect achieved by varying the drive frequency to the inverter, the output voltage of the transformer 120 is seen as represented in an idealized form on line 2 of FIG. 6.

Whereas in the illustrated embodiment, the operating frequency range was greater than the resonant frequency of the inverter amplifier, persons skilled in the art would be able to modify the system which has been disclosed and operate on other portions of the frequency characteristic, such as before the resonant frequency.

## Claims

1. An electronic circuit which can be used for energising a lamp circuit including at least one gaseous discharge lamp from a source of electrical power having a voltage amplitude varying in time, comprising inverter circuit means (110) which can be connected to receive power from said source and including first and second controlled switches (111 and 112), means (123) to gate said switches to conduction respectively in alternate cycles of inverter frequency thereby generating a high frequency electrical signal at an output (121) which can be connected to said lamp circuit to supply power thereto; sensing circuit means (142) which in use generates a control signal in response to lamp current; feedback control circuit means (127) which responds to said control signal to control the gating of the controlled switches thereby regulating lamp current to a predetermined value,
characterised in that said inverter circuit means (110) includes a resonant circuit having a resonant frequency and connected to said output (121), said feedback control circuit means (127) including means which varies the frequency of conduction of said first and second controlled switches (111, 112) in relation to the resonant frequency of said inverter circuit means (110) and in response to said control signal representative of lamp current during normal operation thereby regulating output of said resonant circuit to regulate said lamp current and to reduce the crest factor of lamp current.

2. An energising circuit as claimed in claim 1 wherein the switches (111, 112) are connected in circuit with first and second capacitors (116, 117) to form a bridge circuit, the energising circuit comprising a power transformer (120) connected in the diagonal branch of the bridge circuit (110), the secondary winding (120 B) of the power transformer being adapted for coupling to the lamp through a capacitor (122), the inductance of said power transformer (120) and the value of said capacitor (122) at least partially determining the resonant frequency of said inverter circuit.

3. A circuit as claimed in claim 1 or claim 2 wherein said source of electrical power includes rectifier circuit means receiving power from a 60 Hz input line for generating electrical power for said inverter circuit (110) and a source of carry-over voltage storing energy when the output of said rectifier circuit means is sufficient to supply energy to said inverter circuit means and itself supplying energy to said inverter circuit means when the output of the rectifier circuit means is insufficient to supply energy to said inverter circuit means.

4. A circuit as claimed in any one of claims 1 to 3 wherein the range of operating frequencies of said resonant inverter circuit means as determined by said feedback control circuit means (127) is above the resonant frequency of said inverter circuit means and wherein said feedback control circuit means includes variable frequency oscillator circuit means responsive to said control signal for increasing the frequency of the drive signal to gate said controlled switches as lamp current increases from a reference value.

5. A circuit as claimed in claim 4 wherein said controlled switches are semi-conductor switches (111, 112) connected in series and energised to conduction in mutually exclusive time periods.

6. A circuit as claimed in claim 5 wherein said semiconductor switches are MOSFET transistors (111,112).

7. A circuit as claimed in any one of claims 1 to 6 comprising a phase detector which in use compares a first signal representative of the phase of lamp current and a second signal representative of the phase of applied lamp voltage for determining lamp voltage for determining when the operating frequency approaches said resonant frequency of said inverter circuit means.

8. A circuit as claimed in any one of claims 1 to 7 wherein said feeback control circuit further comprises a start-up voltage circuit responsive to initial application of power to said circuit thereby causing said variable frequency circuit means to operate at a high frequency and reduce the gain of said inverter circuit means for a predetermined time upon start-up to enable heating of the filaments of said lamp.

9. A circuit as claimed in any one of claims 1 to 8 wherein said feedback control circuit means (127) is responsive to the voltage applied to said lamps and increases the inverter frequency if the lamp voltage exceeds a predetermined value.

10. A circuit as claimed in any one of claims 1 to 9 wherein the feedback control circuit means (127) as a frequency response such that its -3db frequency point occurs at a frequency 5 KHz different from a resonant frequency of 50 KHz.

## Patentansprüche

1. Elektronische Schaltungsanordnung, die zur Speisung einer Lampenschaltung mit mindestens einer Gasentladungslampe von einer elektrischen Speiseschaltung mit einer zeitvariablen Spannungsamplitude verwendet werden kann, wobei diese Schaltungsanordnung ein Invertierschaltungsmittel (110) aufweist, das derart geschaltet werden kann, daß es aus der genannten Quelle gespeist wird und einen ersten und zweiten gesteuerten Schalter (111 bzw. 112) aufweist, sowie ein Mittel (123) um die genannten Schalter in wechselnden Zyklen mit der Invertierfrequenz jeweils in den leitenden Zustand zu steuern, wobei ein hochfrequentes elektrisches Signal am Ausgang (121) erzeugt wird, das mit der genannten Lampenschaltung verbunden werden kann um dieselbe zu speisen; weiterhin ein Abtastschaltungsmittel (142), das im Betrieb in Antwort auf Lampenstrom ein Steuersignal erzeugt; ein Rückkopplungssteuerschaltungsmittel (127), das zum Steuern der gesteuerten Schalter auf das genannte Steuersignal reagiert, wobei der Lampenstrom auf einen vorbestimmten Wert geregelt wird, dadurch gekennzeichnet, daß das genannte Invertierschaltungsmittel (110) einen Resonanzkreis mit einer Resonanzfrequenz aufweist, der mit dem genannten Ausgang (121) des genannten Rückkopplungssteuerschaltungsmittels (127) verbunden ist, wobei dieses letztere Mittel ein Mittel aufweist, das die Frequenz der Leitung des genannten ersten und zweiten gesteuerten Schalter (111, 112) in bezug auf die Resonanzfrequenz des genannten Invertierschaltungsmittels (110) und in Antwort auf das genannte Steuersignal, das für den Lampenstrom im normalen Betrieb repräsentativ ist, variiert, wodurch der Ausgang des genannten resonanzkreises zum Regeln des genannten Lampenstroms und zum Verringern des Crestfaktors des Lampenstroms geregelt wird.

2. Speiseschaltung nach Anspruch 1, wobei die Schalter (111, 112) mit einem ersten und zweiten Kondensator (116, 117) verbunden sind zum Bilden einer Brückenschaltung, wobei diese Speiseschaltung einen Leistungstransformator (120) aufweist, der in dem Diagonalzweig der Brückenschaltung vorgesehen ist, wobei die Sekundärwicklung (120 B) des Leistungstransformators zum Koppeln der Lampe über einen Kondensator (122) vorgesehen ist, wobei die Induktivität des genannten Leistungstransformators (120) und der Wert des genannten Kondensators (122) wenigstens teilweise die Resonanzfrequenz der genannten Invertierschaltung bestimmt.

3. Schaltungsanordnung nach Anspruch 1 oder 2, wobei die genannte elektrische Stromquelle ein Gleichrichterschaltungsmittel aufweist, das Speisung von einer 60 Hz Eingangsleitung erhält zum Erzeugen elektrischer Speisung für die genannte Invertierschaltung (110), und eine Quelle für Übertragspannung, die Energie speichert, wenn der Ausgang des genannten Gleichrichterschaltungsmittels ausreicht zum Liefern von Energie zu dem genannten Invertierschaltungsmittel und das selbst Energie zu dem genannten Invertierschaltungsmittel liefert, wenn der Ausgang des genannten Gleichrichterschaltungsmittels nicht ausreicht Energie zu dem genannten Invertierschaltungsmittel zu liefern.

4. Schaltungsanordnung nach einem der Ansprüche 1 bis 3, wobei der Bereich der Arbeitsfrequenzen des genannten Resonanz-Invertierschaltungsmittels, wie dieser durch das genannte Rückkopplungssteuerschaltungsmittel (127) bestimmt ist, über der Resonanzfrequenz des genannten Invertierschaltungsmittels liegt und wobei das genannte Rückkopplungssteuerschaltungsmittel ein Oszillatorschaltungsmittel mit veränderlicher Frequenz aufweist, das auf das genannte Steuersignal zum Erhöhen der Frequenz des Treibersignals reagiert zum Steuern der genannten gesteuerten Schalter wenn der Lampenstrom von einem Bezugswert ansteigt.

5. Schaltungsanordnung nach Anspruch 4, wobei die genannten gesteuerten Schalter Halbleiterschalter (111, 112) sind, die in Reihe geschaltet sind und die gespeist werden um in abwechselnden exklusiven Zeitperioden in den leitenden Zustand geschaltet werden.

6. Schaltungsanordnung nach Anspruch 5, wobei die genannten Halbleiterschalter MOSFET-Transistoren (111, 112) sind.

7. Schaltungsanordnung nach einem der Ansprüche 1 bis 6 mit einem Phasendetektor, der im Betrieb ein erstes Signal, das für die Phase des Lampenstromes repräsentativ ist, und ein zweites Signal, das für die Phase der zugeführten Lampenspannung repräsentativ ist, miteinander vergleicht zur Bestimmung der Lampenspannung um ermitteln zu können, wann die Betriebsfrequenz der genannten Resonanzfrequenz des genannten Invertierschaltungsmittels nähert.

8. Schaltungsanordnung nach einem der Ansprüche 1 bis 7, wobei die genannte Rückkopplungssteuerschaltung weiterhin eine Aufstartspannungsschaltung aufweist, die auf die erste Zuführung von Speisung zu der genannten Schaltung reagiert, wodurch das genannte Schaltungsmittel für veränderliche Frequenz mit hoher Frequenz arbeitet und die Verstärkung des genannten Invertierschaltungsmittels während einer bestimmten Zeit nach dem Start verringert, damit die Glühdrähte der genannten Lampe sich aufheizen können.

9. Schaltungsanordnung nach einem der Ansprüche 1 bis 8, wobei das genannte Rückkopplungssteuerschaltungsmittel (127) auf die den Lampen zugeführte Spannung reagiert und die Invertierfrequenz erhöht, wenn die Lampenspannung einen vorbestimmten Wert Überschreitet.

10. Schaltungsanordnung nach einem der Ansprüche 1 bis 9, wobei das Rückkopplungssteuerschaltungsmittel (127) eine derartige Frequenzkurve hat, daß der -3 db-Frequenzpunkt bei einer um 5 kHz von einer Resonanzfrequenz von 50 kHz abweichenden Frequenz auftritt.

## Revendications

1. Circuit électronique convenable à exciter un circuit de lampe comportant au moins une lampe à décharge à partir d'une source de puissance électrique présentant une amplitude de tension variable dans le temps, ledit circuit comportant un circuit d'inversion (110) pouvant être relié de manière à recevoir de la puissance de ladite source et comportant des premier et deuxième commutateurs commandés (111 et 112), des moyens (123) pour mettre lesdits commutateurs en état de conduction en cycles alternant avec la fréquence d'inversion tout en engendrant un signal électrique à haute fréquence à une sortie (121) qui peut être reliée audit circuit de lampe pour appliquer de la puissance audit circuit, un circuit capteur (142) qui en état de fonctionnement engendre un signal de commande en réponse au courant de lampe, un circuit de commande à réaction (127) qui répond audit signal de commande pour commander la mise en conduction des commutateurs commandés en ajustant le courant de lampe sur une valeur prédéterminée, caractérisé en ce que ledit circuit d'inversion (110) comporte un circuit de résonance présentant une fréquence de résonance relié à ladite sortie (121), en ce que ledit circuit de commande à réaction (127) comporte des moyens qui font varier la fréquence de conduction desdits premier et deuxième commutateurs (111, 112) commandés en relation avec la fréquence de résonance dudit circuit d'inversion (110) et en réponse audit signal de commande qui est représentatif du courant de lampe pendant le fonctionnement normal tout en réglant la sortie dudit circuit de résonance afin de régler ledit courant de lampe et de diminuer le facteur de crête du courant de lampe.

2. Circuit d'excitation selon la revendication 1, dans lequel les commutateurs (111, 112) sont reliés à des premier et deuxième condensateurs (116, 117) de manière à constituer un circuit en pont, le circuit d'excitation comportant un transformateur de puissance (120) intercalé dans la branche diagonale du circuit en pont (110), l'enroulement secondaire (120 B) du transformateur de puissance étant adapté pour être couplé à la lampe par l'intermédiaire d'un condensateur (122), l'inductance dudit transformateur de puissance (120) et la valeur dudit condensateur (122) déterminant au moins partiellement la fréquence de résonance dudit circuit d'inversion.

3. Circuit d'excitation selon la revendication 1 ou 2, dans lequel ladite source de puissance électrique comporte un circuit redresseur recevant de la puissance en provenance d'une ligne d'entrée électrique de 60 Hz permettant d'engendrer de la puissance électrique pour ledit circuit d'inversion (110) ainsi qu'une source de tension de report stockant de l'énergie lorsque la sortie dudit circuit redresseur suffit à fournir de l'énergie audit circuit d'inversion et qui fournit elle-même de l'énergie au circuit d'inversion lorsque la sortie du circuit redresseur ne suffit pas à fournir de l'énergie audit circuit d'inversion.

4. Circuit d'excitation selon l'une quelconque des revendications 1, 2 ou 3, dans lequel la gamme de fréquences de fonctionnement dudit circuit d'inversion comme déterminé par ledit circuit de commande à réaction (127) se situe au-delà de la fréquence de résonance dudit circuit d'inversion et dans lequel ledit circuit de commande à réaction comporte un circuit oscillateur à fréquence variable répondant audit signal de commande pour augmenter la fréquence du signal driver pour mettre les commutateurs commandés en état de conduction lorsque le courant de lampe augmente au-delà d'une valeur de référence.

5. Circuit d'excitation selon la revendication 4, dans lequel lesdits commutateurs commandés sont des commutateurs semiconducteurs (111, 112) montés en série et excités de manière être conducteurs pendant des périodes de temps à exclusion mutuelle.

6. Circuit d'excitation selon la revendication 5, dans lequel lesdits commutateurs semiconducteurs sont des transistors MOSFET (111, 112).

7. Circuit d'excitation selon l'une quelconque des revendications 1 à 6, comportant un détecteur de phase qui en état de fonctionnement compare un premier signal représentatif de la phase du courant de lampe à un deuxième signal représentatif de la phase de la tension de lampe appliquée pour déterminer la tension de lampe afin de pouvoir établir lorsque la fréquence de fonctionnement s'approche de la fréquence de résonance dudit circuit d'inversion.

8. Circuit d'excitation selon l'une quelconque des revendications 1 à 7, dans lequel le circuit de commande à réaction comporte encore un circuit de tension de démarrage répondant à l'application initiale de puissance audit circuit tout en provoquant le fonctionnement dudit circuit de fréquence variable à une fréquence élevée et une réduction du gain du circuit d'inversion pendant une période de temps prédéterminée lors du démarrage pour permettre le chauffage des filaments de la lampe.

9. Circuit d'excitation selon l'une quelconque des revendications 1 à 8, dans lequel ledit circuit de commande à réaction (127) répond à la tension appliquée auxdites lampes et augmente la fréquence d'inversion si la lampe dépasse une valeur prédéterminée.

10. Circuit d'excitation selon l'une quelconque des revendications 1 à 9, dans lequel ledit circuit de commande à réaction (127) présente une telle réponse de fréquence que son point de fréquence de -3 db se situe à une fréquence qui diffère de 5 KHz d'une fréquence de résonance de 50 KHz.
